# EUROPÄISCHE PATENTANMELDUNG

(11) **EP 0 795 943 A1**
(43) Veröffentlichungstag der Anmeldung: **17.09.1997**
(21) Anmeldenummer: 97810111.1
(22) Anmeldetag: 03.03.1997
(51) Int. Cl.: H02G 3/08

(54) **Bausatz und dessen Verwendung zur Herstellung von Schränken, Kanälen oder Fronten für die Haustechnik, Schrank, Kanal oder Front hergestellt mit dem Bausatz**

(30) Priorität: 11.03.1996 CH 624/96
(71) Anmelder: Gantenbein, Ulrich, 9472 Grabs (CH)
(72) Erfinder: Gantenbein, Ulrich, 9472 Grabs (CH)
(74) Vertreter: Riederer, Conrad A., Dr.

(57) **Zusammenfassung**

Der Bausatz ermöglicht beispielsweise die Herstellung eines Schrankes oder Kanals für die Haustechnik in zwei verschiedenen Montagestufen. In der ersten Montagestufe, die nach Vollendung des Rohbaus beginnen kann, wird das Fussteil (11) am Boden befestigt. Hierauf werden die Pfosten (15) mit den bereits daran befestigten Seitenwänden (17) auf die Zapfen (13) des Fussteils (11) aufgesetzt und in senkrechter Stellung mit den teleskopisch verschiebbaren Deckenanschlussgliedern (23) an der Decke befestigt. Der Bodenrahmen (11) und die Strebe (24) sorgen für die genaue Beabstandung der Pfosten (15). Nach dem Einsetzen der Rückwand (19) kann der Installateur bereits mit der Installation der Leitungen usw. beginnen. Dazu dienen die Befestigungsschienen (21). Die Installationsarbeiten können also weitgehend unabhängig vom weiteren Bauverlauf ausgeführt werden. Die zweite Montagestufe erfolgt am Schluss der Bau- und Installationsarbeiten. Diese Stufe umfasst das Anbringen der Montageschienen (37), Seitenabdeckwänden (29), Sockel- und Deckelblenden (33,37) und Türen (31,32). Dies hat den Vorteil, dass die Farbe zu einem späten Zeitpunkt, z.B. wenn die Farbe des Raums bestimmt wird, getroffen werden kann. Auch besteht keine Gefahr einer Beschädigung der sichtbaren Fläche während der Bau- und Installationsarbeiten.

## Beschreibung

Die Erfindung betrifft einen Bausatz zur Herstellung von Schränken, Kanälen oder Fronten für die Haustechnik, welcher Bausatz einen Fussteil, Deckenanschlussmittel und mindestens eine Türe und/oder einen Deckel aufweist.

In der EP-A-0 305 338 wird ein Bausatz zur Herstellung von Kästen oder Kanälen beschrieben. Dieser Bausatz hat verschieden lange Teilstücke von U-förmigem Profil und mindestens eine Tür und/oder eine Deckplatte zum Verschliessen der Oeffnung des U und ein weiteres Teilstück, welches teleskopisch in ein Teilstück eingreifen kann. Solche Bausätze haben in der Haustechnik grosse Anwendung gefunden. Als Nachteil hat sich jedoch erwiesen, dass die Montage solcher Kästen nicht ohne weiteres von einem Elektro- oder Sanitärinstallateur vorgenommen werden kann, sondern dass dazu für diese Montage ausgebildete Fachkräfte notwendig sind. Probleme ergeben sich insbesondere, wenn das Bauwerk nicht genügend genau nach den Ausführungsplänen ausgeführt wird. Wenn die Kästen oder Kanäle vor Abschluss der übrigen Bauarbeiten montiert werden, besteht die Gefahr, dass Beschädigungen auftreten, z.B. die Wände verformt werden, so dass beim späteren Einbau der Türen diese nicht mehr passen. Nachteilig ist auch, dass die Wahl der Farbe nicht erst nach Abschluss der Bau- und Installationsarbeiten getroffen werden kann.

Es ist daher Aufgabe der vorliegenden Erfindung, die angeführten Nachteile zu vermeiden. Insbesondere soll ein Bausatz der eingangs erwähnten Gattung geschaffen werden, welcher auch von nicht speziell dazu ausgebildetem Fachpersonal montiert werden kann. Der Bausatz sollte z.B. von einem Elektro-Installateur problemlos zum Bau eines Elektroschranks verwendet werden können.

Erfindungsgemäss wird diese Aufgabe dadurch gelöst, dass der Bausatz mindestens zwei Pfosten aufweist, dass das Fussteil für die Pfosten im vorbestimmtem Abstand voneinander angeordnete Verbindungsglieder aufweist, und dass als Deckenanschlussmittel für jeden Pfosten ein höhenverstellbares Deckenanschlussglied vorgesehen ist. Die Montage eines Schrankes, Kanals oder einer für eine Nische bestimmte Front kann daher auf einfache Weise derart erfolgen, dass das Fussteil an der vorgesehenen Stelle am Fussboden unter Zuhilfenahme einer Wasserwaage befestigt wird. Hierauf können die Pfosten auf die Verbindungsglieder des Fussteils aufgesetzt werden, wobei sie von diesen in einem vorbestimmten Abstand, z.B. einem Normabstand, voneinander gehalten werden. Hierauf werden die Pfosten mit Hilfe einer Wasserwaage senkrecht ausgerichtet, worauf die Deckenanschlussglieder teleskopisch zur Decke hin verschoben und dort befestigt werden. Diese Montageschritte erfolgen zweckmässigerweise schon nach der Erstellung des Rohbaus, also für Einbauschränke noch bevor die Wände verputzt werden. Hierauf können weitgehend unabhängig vom übrigen Bauablauf die Installationsarbeiten ausgeführt werden. Die Türen und/oder Deckel und eventuelle Abdeckprofile werden erst nach der Fertigstellung der Bau- und Installationsarbeiten montiert. Dadurch werden Beschädigungen der sichtbaren Flächen des Schrankes, Kanals oder der Front bei den Bau- und Installationsarbeiten vermieden. Auch kann ein Entscheid über Farbe der Schränke, Kanäle oder der Fronten zu einem späten Zeitpunkt getroffen werden, z.B. wenn die Farbe des Raumes bestimmt wird.

Der jeweilige Pfosten besteht vorteilhaft aus einem Rohr, beispielsweise aus einem Stahlrohr. Das Rohr hat vorteilhaft einen rechteckigen Querschnitt. Dies hat den Vorteil, dass die Steckverbindungsglieder, wenn sie entsprechend der Form des Rohrinnenquerschnitts ausgeführt werden, das Rohr verdrehungssicher in seiner Lage halten. Vorteilhaft weist der Bausatz auch eine Strebe zur Beabstandung der Pfosten im Deckenbereich auf. Dadurch kann sichergestellt werden, dass auch im Deckenbereich ein vorbestimmter Normabstand sicher eingehalten wird, so dass bei der Montage der Türen oder Deckel diese genau passen. Je nach Bedarf können noch weitere Streben zwischen Boden und Decke vorgesehen werden. Zweckmässigerweise wird bei Fronten das Fussteil durch eine Bodenschiene, bei Schränken oder Kanälen durch einen rechteckigen Bodenrahmen gebildet, welche bzw. welcher an den vorderen Ecken als Verbindungsglieder senkrechte, in das Rohr passende Zapfen aufweist. Dadurch wird die Montage des Schrankes, des Kanals oder der Front erheblich erleichtert.

Zweckmässigerweise besitzt das Deckenanschlussglied Mittel zur Befestigung an der Decke und einen in das Rohr passenden Zapfen. Ein solches Deckenanschlussglied kann bei der Montage teleskopisch zur Decke hin verschoben und dort beispielsweise mittels Schrauben oder Bolzen befestigt werden. Für einen Aufputzschrank weist der Bausatz Seitenwände und eine Rückwand auf. Nischen in Bauwerken können durch eine Front verschlossen werden, so dass auf die Seitenwände und die Rückwand verzichtet werden kann. Der Bausatz kann aber auch für Nischen Seitenwände und eine Rückwand aufweisen. Dies ist immer dann vorteilhaft, wenn ein Schrank oder Kanal Befestigungsschienen für Kabel oder Rohre aufweisen soll. Diese Befestigungsschienen können dann bereits an den Seitenwänden und an der Rückwand montiert auf die Baustelle geliefert werden. Eine vorteilhafte Ausführungsform der Erfindung sieht vor, dass die Seitenwände auf der Innenseite zwei in Abstand voneinander angeordnete Schienen und einen Baurahmen aufweisen, welcher entlang dieser Schienen verschiebbar und in der gewünschten Lage arretierbar ist. Solche Baurahmen sind beispielsweise im Handel unter Bezeichnung Alu-Selbstbaurahmen erhältlich. Je nach der Art der im Baurahmen angeordneten Geräte kann dieser dann mehr oder weniger tief im Schrank befestigt werden.

Für die Aufputzmontage eines Schrankes oder Kanals kann der Bausatz Seitenabdeckwände aufweisen. Solche Seitenabdeckwände können ganz am Schluss der Bau- und Installationsarbeiten zusammen mit den Türen oder Deckel montiert werden. Es besteht somit keine Gefahr, dass das Aeussere der Schränke oder Kanäle während der Bau- und Installationsarbeiten beschädigt wird. Von besonderem Vorteil ist, dass die Farbgebung ganz am Schluss bestimmt werden kann, wenn auch die Farbgebung der Räume feststeht. Zur Fixierung der Seitenabdeckwände im hinteren Bereich können U-förmige Montageschienen dienen.

Für den jeweiligen Pfosten kann eine Pfostenabdeckung vorgesehen sein, welche eine Frontfläche und eine in einem Abstand dazu angeordnete Fläche aufweist, die der Montage für Frontelemente und als Falz für die Tür und/oder den Deckel dient, wobei die Pfostenabdeckung quer zum Pfosten verschiebbar und in der gewünschten Stellung befestigbar ist.

Es ist möglich, die Pfostenabdeckung durch ein Z-förmiges Profil zu bilden. Dadurch kann sichergestellt werden, dass bei in die Wandung des Bauwerks eingebauten Fronten, Schränken oder Kanälen die Türen und Deckel mit der Wandung fluchten und zwar unabhängig davon, ob nach der Montage der Pfosten der Fertigverputz mehr oder weniger dick aufgetragen wurde. Bei anderen Schränken als Einbauschränken kann die Pfostenabdeckung durch den vorderen Abschnitt der Seitenabdeckwand gebildet sein.

Die Erfindung betrifft auch die Verwendung des Bausatzes. Die Verwendung erfolgt vorteilhaft so, dass das Fussteil, die Pfosten mit den Deckenanschlussgliedern, und gegebenenfalls die Strebe, die Seitenwände und die Rückwand bereits nach Fertigstellung des Rohbaus montiert werden, und dass die Pfostenabdeckung, die Türen oder Deckel und gegebenenfalls die Seitenabdeckwände später montiert werden.

Schliesslich beinhaltet die Erfindung auch einen Schrank, einen Kanal oder eine Front hergestellt mit einem Bausatz und ist gekennzeichnet durch ein Fussteil, welches mindestens zwei Verbindungsglieder aufweist, die in einem vorbestimmten Abstand voneinander angeordnet sind, mindestens zwei Pfosten, von denen jeder über eines der Verbindungsglieder mit dem Fussteil verbunden ist und je einem Deckenanschlussglied, welches in bezug auf den Pfosten teleskopisch verschiebbar ist.

Ausführungsbeispiele der Erfindung werden nun unter Bezugnahme auf die Zeichnung näher beschrieben. Es zeigt:
- Fig.1: eine perspektivische Explosionsdarstellung eines Schranks oder Kanals vor dem Einbau von Türen oder Deckeln und Abdeckwänden,
- Fig.2: den Schrank oder Kanal von Fig.1 mit Türen und Abdeckwänden, wobei aber eine Abdeckwand in Explosionsdarstellung gezeigt wird,
- Fig.3: einen Horizontalschnitt durch den Schrank von Fig.2, wobei zusätzlich noch ein Kasten eingebaut ist,
- Fig.3a: ein Detail von Fig.3,
- Fig.4: einen Einbauschrank oder -kanal in einer Nische des Bauwerks vor dem Anbringen der Türen oder Deckel,
- Fig.5: den Schrank von Fig.4 nach dem Anbringen von Türen,
- Figuren 6 und 7: Horizontalschnitte durch zwei verschiedene Ausbaustufen von Fronten,
- Figuren 8 und 9: Horizontalschnitte durch zwei verschiedene Ausbaustufen von Einbauschränken oder -kanälen,
- Fig.10: einen Vertikalschnitt durch einen Schrank oder einen Kanal, bei welchem ein Baurahmen entlang von Schienen horizontal in der Tiefe verschiebbar ist.

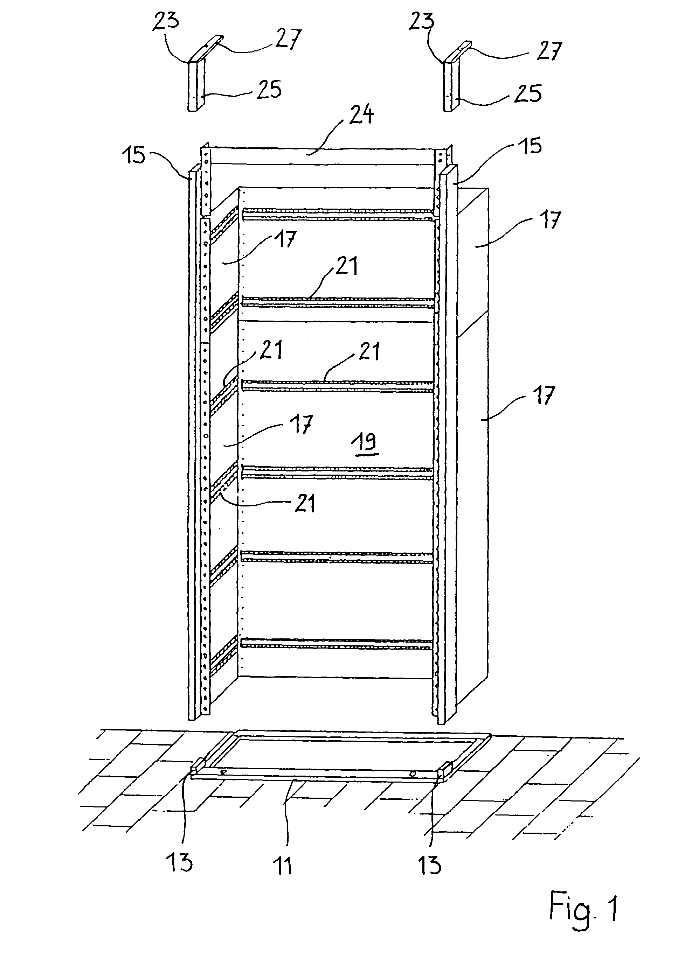

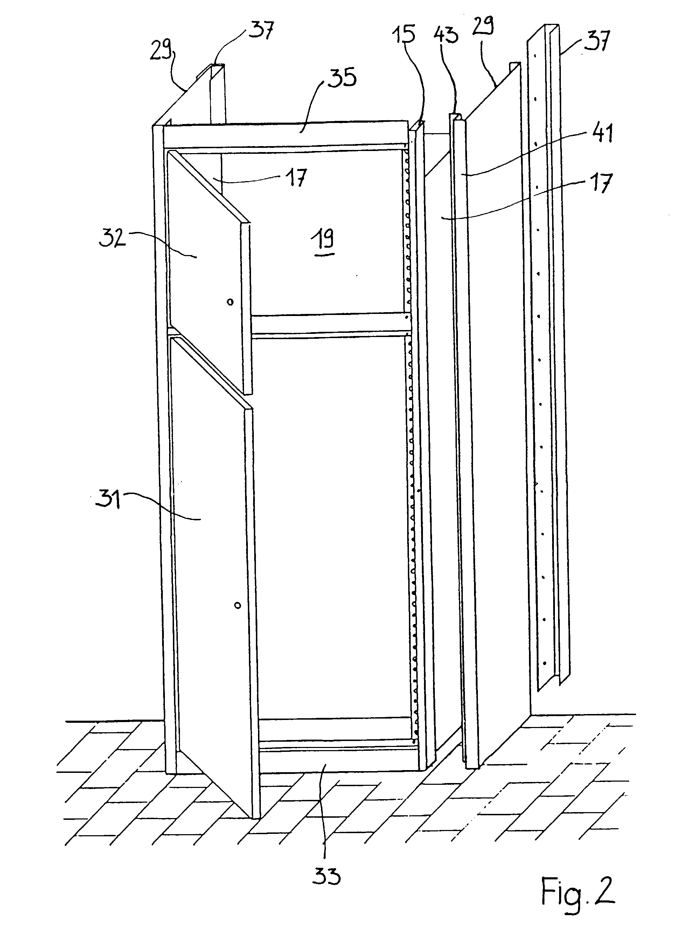

Der in den Figuren 1 bis 3a dargestellte Schrank oder Kanal zur Aufputzmontage besitzt ein Fussteil 11 in Form eines rechteckigen Bodenrahmens, welcher an den vorderen Ecken senkrechte Verbindungsglieder 13 in Form von rechteckigen Zapfen aufweist. Die Zapfen 13 sind in einem vorbestimmten Abstand, z.B. einem Normabstand, voneinander angeordnet. Auf diese Zapfen 13 sind die Pfosten 15 aufgesteckt, die mit den Seitenwänden 17 verbunden sind. Die Seitenwände 17 sind mit der Rückwand 19 verbunden. Seitenwände 17 und Rückwand 19 können aus verschiedenen Teilen bestehen. Seitenwände 17 und Rückwand 19 weisen beim vorliegenden Ausführungsbeispiel von Fig.1 Befestigungsschienen 21 auf, wie sie beispielsweise im europäischen Patent Nr. 0 555 187 beschrieben und im Handel unter der Bezeichnung "Galip-Kombischiene" erhältlich sind. In Fig.2 sind die Befestigungsschienen nicht dargestellt. Als Material für die Pfosten 15 eignet sich insbesondere ein Stahlrohr mit rechteckigem Querschnitt. Mit den Deckenanschlussgliedern 23, welche in die Pfosten 15 passende Zapfen 25 aufweisen, ist der Schrank oder Kanal an der Decke befestigt. Zur Befestigung mit Schrauben oder Bolzen weisen die Deckenanschlussglieder 23 eine Befestigungslasche 27 auf. Die Deckenanschlussglieder 23 sind in bezug auf die Pfosten 15 höhenverstellbar, z.B. teleskopisch verschiebbar. Vorteilhaft ist eine Strebe 24 zur Beabstandung der Pfosten im Deckenbereich vorgesehen. Es können aber auch im Bereich zwischen Boden und Decke nach Bedarf weitere Streben vorgesehen werden.

Nachdem der Schrank oder Kanal mit den in Fig.1 dargestellten Teilen montiert wurde, was bereits nach Vollendung des Rohbaus eines Hauses erfolgen kann, kann der Installateur mit der Installation der Leitungen und Geräte beginnen (Fig.2). Die Endmontage des Schrankes erfolgt dann vorteilhaft erst nach Abschluss dieser Arbeiten. Zur Endmontage gehört die Befestigung der Montageschiene 37, der Seitenabdeckwände 29, der Türen 31,32 oder Deckel, der Sockelblende 33 und der Deckenblende 35. Die Farbgebung dieser Teile kann somit zu einem Zeitpunkt erfolgen, an dem die Installationsarbeiten praktisch abgeschlossen sind. In Fig.2 ist eine Montageschiene 37 und eine Seitenabdeckwand 29 zur besseren Veranschaulichung separat dargestellt. Deren Montage erfolgt aber vor jener der Sockel- und Deckelblenden 33,35 und der Türen 31,32.

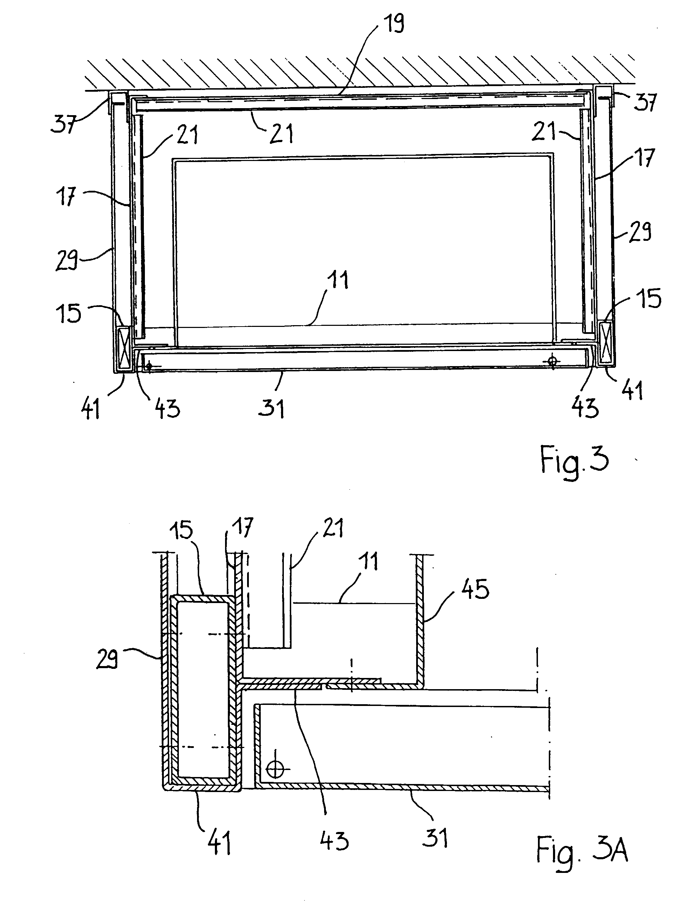

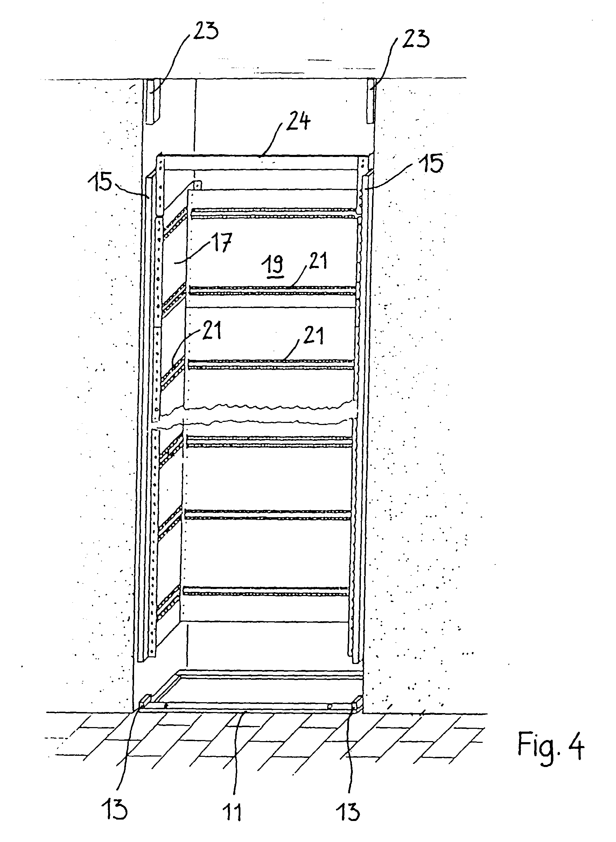

Die jeweilige Seitenabdeckwand 29 ist in der zugehörigen U-förmigen Montageschiene 37 horizontal verschiebbar. Wie insbesondere aus den Figuren 3 und 3a ersichtlich, dient der vordere Teil der Seitenabdeckwand 29 als Pfostenabdeckung und besitzt zu diesem Zweck eine Frontfläche 41. In einem Abstand dazu ist eine Fläche 43 zur Montage der Frontelemente, wie Sockel- und Deckelblenden 33,35 und als Anschlag für die Türen 31,32 oder einen Deckel angeordnet. An der Fläche 43 kann bei Bedarf auch eine Dichtung angebracht werden.

Aus Fig.3 ist noch ersichtlich, dass z.B. ein Kasten 45 in den Schrank oder Kanal eingebaut werden kann.

Betrachtet man Fig.2, so wird ersichtlich, dass auch noch zu einem späteren Zeitpunkt an den bestehenden Schrank einer oder mehrere weitere Schränke angebaut werden können. Zu diesem Zweck braucht bloss eine Seitenabdeckwand 29 und die Montageschiene 37 entfernt werden, worauf der Anbau des zweiten Schranks erfolgen kann. Eine Säule 15 genügt dabei als gemeinsame Säule für zwei benachbarte Schränke und die Seitenabdeckwand 29 und die Montageschiene 37, welche demontiert wurde, können beim letzten Anbauschrank wieder eingesetzt werden.

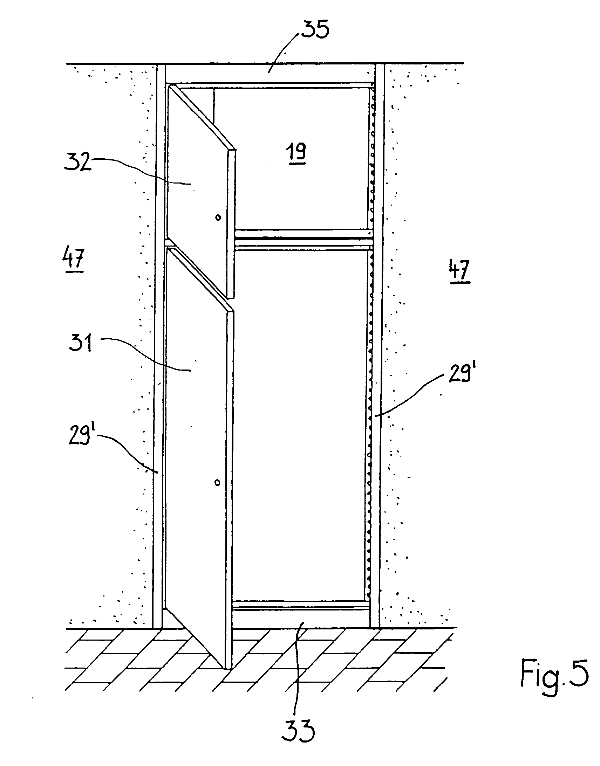

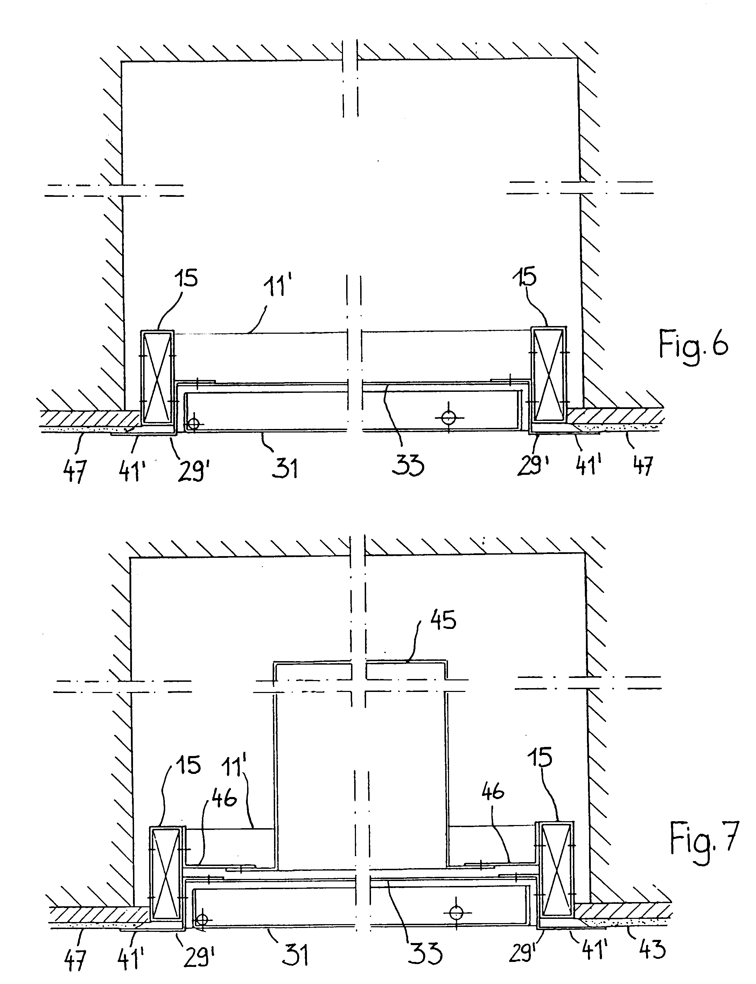

Das Ausführungsbeispiel gemäss den Figuren 4, 5 und 9 zeigt einen Einbauschrank oder -kanal, der im wesentlichen aus den gleichen Teilen besteht wie der Schrank oder Kanal nach den Figuren 1 bis 3. Anstelle der Seitenabdeckbleche 29 sind Z-förmige Profile 29' vorgesehen. Das Z-Profil 29' dient der Pfostenabdeckung und besitzt zu diesem Zweck eine Frontfläche 41', welche seitlich über den Pfosten 15 hinausreicht und einen Bereich der Wandung des Bauwerks abdeckt. In einem Abstand zur Frontfläche 41' ist nach innen eine Fläche 43 für Frontelemente, inklusive der Türen 31,32 vorgesehen. Durch die in bezug auf die Pfosten 15 horizontal verschiebbaren Z-Profile 41 kann sichergestellt werden, dass die Türen 31,32 oder Deckel mit der Wandung fluchten, und zwar unabhängig davon, ob nach der Montage der wesentlichen Teile des Schrankes oder Kanals der Fertigverputz 47 mehr oder weniger stark aufgetragen wurde (Fig.6 bis 9).

Je nach den Anforderungen, sind verschiedene Ausbaustufen möglich. Vier verschiedene Ausbaustufen sind in den Figuren 6 bis 9 dargestellt.

Die erste Ausbaustufe von Fig.6 besteht aus einer eine Nische 12 abschliessenden Front. Diese besitzt im wesentlichen eine Bodenschiene 11', Pfosten 15, Z-Profile 29', eine Tür 31 oder einen Deckel, eine Sockelblende 33 und eine Deckenblende 35 wie in Fig.2, und zweckmässigerweise eine die Pfosten 15 verbindenden Strebe 24 wie in Fig.1. Die Bodenschiene 11' ist gleich ausgebildet wied der vordere Teil des Bodenrahmens 11 von Fig.4.

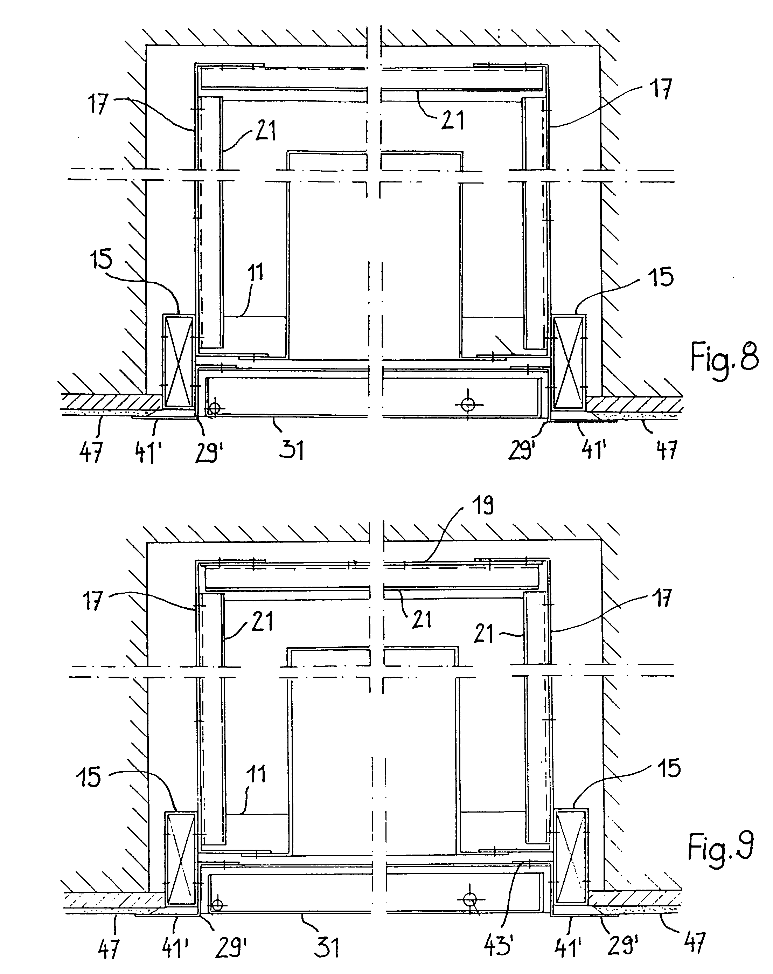

Bei der Front gemäss der Fig.7 ist zusätzlich noch ein Kasten 45 vorgesehen, welcher mit zwei Montagewinkeln 46 an den Pfosten 15 befestigt ist.

Beim Schrank oder Kanal gemäss Fig.8 sind Seitenwände 17 vorhanden, die mit oder ohne Befestigungsschienen 21 ausgerüstet sein können.

Beim Schrank oder Kanal gemäss Fig.9 ist zusätzlich noch eine Rückwand 19 vorgesehen.

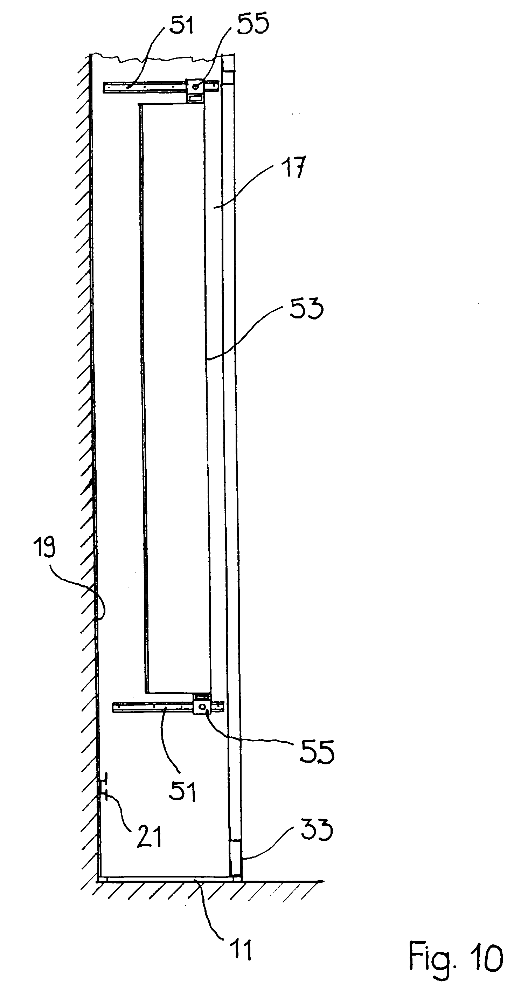

Wie Fig.10 zeigt, können die Seitenwände 17 eines Schrankes oder Kanals auf der Innenseite zwei in Abstand voneinander angeordnete Schienen 51 aufweisen, welche gestatten, einen Baurahmen 53 entlang diesen Schienen zu verschieben und beispielsweise durch Schrauben 55 in der gewünschten Lage zu arretieren. Je nach der Art der auf dem Baurahmen 53 angebrachten Geräte kann somit der Baurahmen 53 in einer Stellung arretiert werden, welche das Schliessen der Tür ermöglicht, ohne dass die Tür an den auf dem Baurahmen 53 montierten Geräten anstösst.

Zusammenfassend kann festgehalten werden, dass der Bausatz beispielsweise die Herstellung eines Schrankes oder Kanals für die Haustechnik in zwei verschiedenen Montagestufen ermöglicht. In der ersten Montagestufe, die nach Vollendung des Rohbaus beginnen kann, wird das Fussteil 11 am Boden befestigt. Hierauf werden die Pfosten 15 mit den bereits daran befestigten Seitenwänden 17 auf die Zapfen 13 des Fussteils 11 aufgesetzt und in senkrechter Stellung mit den teleskopisch verschiebbaren Deckenanschlussgliedern 23 an der Decke befestigt. Der Bodenrahmen 11 und die Strebe 24 sorgen für die genaue Beabstandung der Pfosten 15. Nach dem Einsetzen der Rückwand 19 kann der Installateur bereits mit der Installation der Leitungen usw. beginnen. Dazu dienen die Befestigungsschienen 21. Die Installationsarbeiten können also weitgehend unabhängig vom weiteren Bauverlauf ausgeführt werden. Die zweite Montagestufe erfolgt am Schluss der Bau- und Installationsarbeiten. Diese Stufe umfasst das Anbringen der Montageschienen 37, Seitenabdeckwänden 29, Sockel- und Deckelblenden 33,37 und Türen 31,32. Dies hat den Vorteil, dass die Farbe zu einem späten Zeitpunkt, z.B. wenn die Farbe des Raums bestimmt wird, getroffen werden kann. Auch besteht keine Gefahr einer Beschädigung der sichtbaren Fläche während der Bau- und Installationsarbeiten.

Die vorliegende Beschreibung zeigt die wesentlichen Aspekte der Erfindung. Es sind jedoch noch viele Ergänzungen und Abänderungen möglich ohne vom Erfindungsgedanken abzuweichen.

## Patentansprüche

1. Bausatz zur Herstellung von Schränken, Kanälen oder Fronten für die Haustechnik, welcher Bausatz ein Fussteil (11), Deckenanschlussmittel (23) und mindestens eine Tür (31,32) und/oder Deckel aufweist, dadurch gekennzeichnet, dass der Bausatz weiter mindestens zwei Pfosten (15) aufweist, dass das Fussteil (11) für die Pfosten (15) in vorbestimmtem Abstand voneinander angeordnete Verbindungsglieder (13) aufweist, und dass als Deckenanschlussmittel für jeden Pfosten ein höhenverstellbares Deckenanschlussglied (23) vorgesehen ist.

2. Bausatz nach Anspruch 1, dadurch gekennzeichnet, dass der jeweilige Pfosten aus einem Rohr (15) besteht.

3. Bausatz nach Anspruch 2, dadurch gekennzeichnet, dass das Rohr (15) rechteckigen Querschnitt besitzt.

4. Bausatz nach einem der Ansprüche 1 bis 3, dadurch gekennzeichnet, dass er eine Strebe (24) zur Beabstandung der Pfosten (15) im Deckenbereich aufweist.

5. Bausatz nach einem der Ansprüche 1 bis 4, dadurch gekennzeichnet, dass das Fussteil (11) durch einen rechteckigen Bodenrahmen oder eine Bodenschiene gebildet ist, welcher oder welche als Verbindungsglieder an den vorderen Ecken senkrechte, in das Rohr (15) passende Zapfen (13) aufweist.

6. Bausatz nach einem der Ansprüche 1 bis 5, dadurch gekennzeichnet, dass das Deckenanschlussglied (23) Mittel (27), z.B. eine Befestigungslasche zur Befestigung an der Decke und einen in das Rohr (15) passenden Zapfen (25) aufweist.

7. Bausatz nach einem der Ansprüche 1 bis 6, dadurch gekennzeichnet, dass er zwei Seitenwände (17) und eine Rückwand (19) aufweist.

8. Bausatz nach Anspruch 7, dadurch gekennzeichnet, dass jede Seitenwand (17) auf der Innenseite zwei in Abstand voneinander angeordnete Schienen (51) aufweist, und dass der Bausatz einen Baurahmen (53) enthält, welcher entlang dieser Schienen (51) verschiebbar und in der gewünschten Lage durch Feststellmittel (55) arretierbar ist.

9. Bausatz nach einem der Ansprüche 1 bis 8, dadurch gekennzeichnet, dass er Seitenabdeckwände (29) aufweist.

10. Bausatz nach einem der Ansprüche 1 bis 9, dadurch gekennzeichnet, dass er eine Montageschiene (37) mit U-förmigem Profil für jede Seitenabdeckwand (29) aufweist.

11. Bausatz nach einem der Ansprüche 1 bis 10, dadurch gekennzeichnet, dass für den jeweiligen Pfosten (15) eine Pfostenabdeckung vorgesehen ist, welche eine Frontfläche (41) und eine in einem Abstand dazu angeordnete Fläche (43), die der Montage für Frontelemente und als Falz für die Tür (31,32) oder den Deckel dienen kann, und dass die Pfostenabdeckung horizontal zum Pfosten (15) verschiebbar und in der gewünschten Stellung befestigbar ist.

12. Bausatz nach Anspruch 11, dadurch gekennzeichnet, dass die Pfostenabdeckung durch ein Z-förmiges Profil (29') gebildet ist.

13. Bausatz nach Anspruch 11, dadurch gekennzeichnet, dass die Pfostenabdeckung durch den vorderen Abschnitt der Seitenabdeckwand (29) gebildet ist.

14. Verwendung eines Bausatzes gemäss einem der Ansprüche 1 bis 13 zur Herstellung von Schränken oder Kanälen für die Haustechnik.

15. Verwendung nach Anspruch 14, dadurch gekennzeichnet, dass das Fussteil (11), die Pfosten (15) mit den Deckenanschlussgliedern (23) und gegebenenfalls die Strebe (24), die Seitenwände (17) und die Rückwand (19) in einem ersten Montageschritt montiert werden, und dass die Seitenabdeckwände (29) oder die Pfostenabdeck-Profile (29'), die Türen (31,32) oder die Deckel später montiert werden.

16. Schrank oder Kanal hergestellt mit einem Bausatz nach einem der Ansprüche 1 bis 14, gekennzeichnet durch ein Fussteil (11), welcher mindestens zwei Verbindungsglieder (13) aufweist, die in einem vorbestimmten Abstand voneinander angeordnet sind, mindestens zwei Pfosten (15), von denen jeder über eines der Verbindungsglieder (13) mit dem Fussteil (11) verbunden ist und je einem Deckenanschlussglied (23), welches bei der Montage in bezug auf den Pfosten (15) teleskopisch verschiebbar ist.
